# EUROPEAN PATENT APPLICATION

(11) **EP 2 238 831 A1**
(43) Date of publication of application: **13.10.2010**
(21) Application number: 10169271.3
(22) Date of filing: 18.07.2005
(51) Int. Cl.: A01K 73/045

(54) **High speed, increased hydrodynamic efficiency, light-weight molded trawl door and methods for use and manufacture**

(30) Priority: 26.07.2004 IS 7371; 02.08.2004 US 598532 P; 20.10.2004 IS 7514
(62) Divisional of application: 05759016.8
(71) Applicant: Hampidjan HF., 220 Hafnarfjördur (IS)
(72) Inventor: Gudnason, Halldor Halldor, Egill, 270, Mosfellsbaer (IS); Vigfusson, Gudmundur, 810, Hveragerdi (IS)
(74) Representative: Patel, Nikesh

(57) **Abstract**

A trawl door having enhanced and rather high efficiency, lightness of weight in water and ease of manufacture. The trawl door has a leading edge (6a) and a trailing edge (30,32), at least one main deflector body (3,4) having a leading edge (31) and a trailing edge (30,32) and having a convex outer side and a concave inner side, the trawl door having (i) at least one forward slat (6) having a leading edge (6a) and a trailing edge and (ii) a profile for at least a portion of the trawl door where a) the at least one forward slat's leading edge (6a) is disposed forward of the leading edge (31) of the at least one main deflector body; and b) the at least one main deflector body has a profile (27), the trawl door being **characterized in that** (iii) the profile for the at least a portion of the trawl door is configured so that at least a portion of the at least one forward slat (6) is above the top surface of the profile of the at least one main deflector body.

## Description

### FIELD OF THE INVENTION

The Present Invention relates generally to trawl doors, and more particularly to trawl doors having enhanced and rather high efficiency, lightness of weight In water and ease of manufacture. Trawl doors of the present invention are capable of the highest modern trawling speeds while also permitting the maximum scope length of main warp without sinking the trawl system below a desired elevation in the water column, thereby conserving optimal trawl opening and economy and controllability of trawl fishing operations.

### DESCRIPTION OF THE KNOWN ART

Modern trawl fisheries are complicated by an increase in operating costs due primarily to increasingly expensive fuel costs affecting both the catch of as well as the transportation to market of fish and value added fish product. The increase in operating costs in combination with the tendency of regulatory authorities to impose fixed catch quotas in one form or another have combined to force trawl fishing vessel operators to increase the efficiency of their trawl systems. One impact of this demand for increased efficiency of the trawl system is a demand for increased trawl door efficiency, and in particular an ever increasing need for trawl doors that are efficient at shallow depths and high speeds, as modern pelagic trawling increasingly requires economic operations at shallow depths and high speeds.

In addition, more and more modern trawling vessels must participate in a variety of different fisheries in order to be economical, and thus must use a variety of different trawls, having different requirements for the opening parameters of their trawl mouths. For example, some fisheries require trawls exhibiting a high vertical opening and a moderate horizontal opening (high opening trawls), meaning that the trawl doors should provide less spread and thus should generate less water resistance, while other fisheries require trawls exhibiting a low vertical opening and a maximal horizontal opening (wide body trawls), meaning maximal spreading forces are needed from the trawl doors.

Problematically, known trawl door designs are not optimally economical at shallow depths or high speed trawling operations, nor can they be optimally interchanged between operational requirements for high opening trawls and wide body trawls. For one reason, at shallow depths less towing warp may be paid out as the combination of heavy wire rope towing warps, the weight of the trawl door and trawl footrope weights operate to sink the trawl system below an elevation in the water column required for many pelagic fishing operations. For another reason, due to the fact that only such relatively short lengths of wire rope main towing warps are able to be paid out during high speed shallow depth trawling operations, a given set of trawl doors is not able to provide the requisite horizontal distance (spread) between towing points on the trawl for optimal trawl spread and opening, as the towing warps are too short to permit such distance. To overcome this problem, some pelagic trawlers adapt a single and the same pair of trawl doors for various trawl fisheries by changing the angle of attack for that single pair of trawl doors to provide either more or less spreading force, as needed. That is, at lower angles of attack, the trawl door provides less spread, and also less water resistance, while at higher angles of attack the trawl door provides more spread, and more water resistance. Problematically, any particular trawl door only exhibits optimum hydrodynamic efficiency at a certain angle of attack, just as any particular airfoil only exhibits optimum aerodynamic efficiency at a certain angle of attack of its chord to the airflow, and thus varying the angle of attack of a certain trawl door in order to regulate spread and water resistance forces necessarily means the trawl doors and thus the trawling vessel must operate at a reduced level of efficiency.

In order to overcome this problem, some pelagic trawlers use two varying sizes and even different designs of trawl doors, despite the increased costs and inconvenience associated with such practice. Typically, one trawl door pair is larger in size than the other trawl door pair, and thus heavier in water, and is used at deeper trawling elevations with longer lengths of towing warps, where the trawl doors are able to properly spread both towing warps and trawl. Or, it may be used with a wide body trawl at deeper depths. The second door pair may be smaller in size, and thus lighter weight in water as well as having less resistance in water, and is thus able to be operated with a high opening trawl at moderate depths and at higher speeds and higher elevations in the water column, although in such case it is not able to provide optimal spread for the towing vessel due to the smaller size of the trawl door.

Currently, no single trawl door construction exists that is both light weight in water, optimally efficient both at shallow depth and high speed trawling operations as well as at deeper depth trawling operations, nor optimally useful both at spreading high opening pelagic trawls as well as spreading wide body pelagic trawls. Thus, a long term need has been felt in the industry for a trawl door construction that is light weight in water, efficient at high speeds and can permit a varied amount of spreading force while maintaining optimal hydrodynamic efficiency.

Trawl door design has evolved from otter boards and "V" shaped plates both of which have no camber at all, to modern trawl doors having camber. Commonly, trawl door design occurs under the premise and experimentally thus far conventionally confirmed practice of designing the trawl door to deflect or thrust "inward" the greatest volume of water possible for the least drag. The premise of trawl door design in the field has been to generate the most "outwardly" directed force possible by virtue of the least energetic displacement of a given volume of water in an "inward" direction.

U.S. Patent 4,180,935 shows a trawl door formed from a single main deflector body having a relatively thick profile width and a range of profile shapes similar to those found in many airfoils. It is taught that in the most preferred embodiment, the profile of the main deflector has an outer side that is convex and an inner side that is both convex (in the forward approximately third of the length of the profile) as well as concave (in the rear approximately two thirds of the length of the profile). This patent also teaches in particular that a profile for a main deflector and/or trawl door preferably does not have a purely concave inner surface (the natural curvature leading to the trailing edge not being counted as part of the inner surface). Additionally, this patent teaches that the shapes which it discloses for a preferred profile of a trawl door are most superior, and makes no use of additional lift enhancing structures, thus the main deflector comprises the entire lift generating structure of the trawl doors taught in this patent. However, teachings of U.S. 4,180,935 that pertain to the shape of main deflector bodies used in trawl doors essentially have not been found useful by those in the art and appear not to be used by the industry.

Otter boards of similar shape are disclosed in US 3,190,025 having adjustable vanes connected through mechanical linkage whereby its angle of incidence can be adjusted.

German patent DE 562 243 describes in 1931 a cambered profile made up of a number of aerofoil sections.,

U.S. Patent 4,640,037 shows a trawl door having inner concave and outer convex surfaces forming a cambered profile having a relatively thin width, and additionally incorporating lift enhancing slots in the leading edge of the main deflector body. The main deflector body itself is formed with a cambered profile that while being extremely thin, e.g. the thickness of a single one centimeter (1 cm) plate of steel, nonetheless has greater camber for its forward portion than for its rearward portion. However, while embodiments of trawl doors as shown in U.S. 4,640,037 have not been found sufficiently efficient so as to be preferred for pelagic fisheries and essentially are not in use in modern pelagic trawl fishing operations, certain embodiments of trawl doors as disclosed in this patent are used in bottom trawl fishing. It is significant to point out that because trawl doors for pelagic fishing are not in contact with the bottom of the ocean or sea such trawl doors have no opportunity to generate spreading force from ground shear, but only from hydrodynamic lift, and thus require a maximally efficient hydrodynamic design. The opposite is true for trawl doors intended and designed mainly for bottom trawling, some of which depend almost entirely on ground shear to generate spreading forces. Therefore, when considering whether or not industry acceptability of a conventional trawl door is a good indication of trawl door hydrodynamic efficiency, it is important to consider trawl doors accepted and used by pelagic trawlers, where no ground shear is acting to spread the trawl door.

Nonetheless, the basic concept of a trawl door having a thin thickness (i.e. the thickness of a single plate of sheet steel, such as one centimeter), symmetric camber both for the inner concave and outer convex surface, and at least one spoiler disposed forward of the deflector body's leading edge as all shown in U.S. 4,640,037 is widely used in trawl doors today.

It is widely held that the most efficient design of a light weight in water trawl door is one manufactured by NET Systems, Inc., a subsidiary of Nichimo of Japan. The profile of the main deflector body of this trawl door has a relatively wide profile, using widths similar to although seemingly lesser than those taught in U.S. 4,180,935 and includes a cambered profile wherein the camber defined by the curvature of the surface of outer side of the trawl door's main deflector body is convex and essentially oppositely symmetrical to the camber defined by the curvature of the surface of the inner side of the trawl door's main deflector body, which inner side is concave.

At a predetermined angle of attack to the water flow and at most desired pelagic trawling depths, the main deflector body of the NETS trawl door is considered as able to most economically displace "inward" (i.e. toward the center of the trawl, as well as toward the opposing trawl door) a given volume of water per unit time for a given water flow velocity as compared to other main deflector body designs, thereby creating an opposing force that, in keeping with Newton's second law forces the trawl door "outward" (i.e. away from the center of the trawl as well as away from the opposing trawl door).

Again, this considered highly efficient light weight in water NETS trawl door design does not incorporate lift enhancing structures disposed forward of the leading edge of the main deflector body, and in fact only includes for its lift generating shape a main deflector body.

Despite the frequent reference to airfoil profiles in the above referenced patents and generally in the art when describing the profiles of trawl doors and/or main deflectors included in trawl doors, little cross-engineering has been applied between airfoil design and trawl door design. In fact, in the art of trawl door design, manufacture, marketing as well as in the field of trawl fishing in general, the term "wing" or "wing like" or "wing shape" is extensively used, and either or both refers to trawl doors wherein the leading edge of a trawl door has a "swept back" configuration, and/or where the main deflector body of such a trawl door is cambered, usually where the cambers created by the surfaces of the main deflector bodies outer and inner sides are symmetrical, and also where the camber created by surface of the main deflector body's outer side is substantial greater than the camber created by the surface of the main deflector body's inner side. Most commonly, the term "wing shaped" in reference to trawl doors means a trawl door construction wherein the leading edge of said "wing shaped" trawl doors takes the shape of a wide, horizontally oriented "V", much like a "delta wing" or a "swept wing", while the profile of the trawl door's main deflector body (which may form the entire thrust creating structure of the trawl door) has symmetrical camber both defining the curvature of its inner side surface as well as defining the curvature of its outer side surface, from leading edge to trailing edge. Such trawl doors known as "wing shaped" trawl doors represent the state of the art in the field. They are held by the industry to be the best shape and construction possible for a trawl door and are dominant in use in the conventional pelagic trawl fishing industry.

However, despite the terminology of "wing shaped" widely and generally used by the trawl door industry in referenced to conventional trawl door design, as already mentioned above little or no substantial engineering similarity exists between conventional trawl door design and conventional airplane wing design. For one reason, one of the complications impeding successful application of airfoil designs to trawl door design has been that modern trawling speeds of approximately three to seven knots are considered by those skilled in the art to apply and correlate in modeling to air speeds approaching supersonic, where thinner wings having shapes proven not efficacious for trawl doors are applicable.

Thus, attempts at employing efficient airfoil designs in trawl doors have not been successful. Furthermore, employing maximally efficient Low-Speed (and high lift) airfoil designs into trawl doors is contrary to widely held beliefs in the industry regarding engineering principles cross-applicable between trawl doors and airfoils, with such widely held beliefs in the art mandating that modern trawling speeds of 3.0 to 7.0 knots correlate to high air speeds, even speeds approaching supersonic.

A highly efficient low-speed high-lift airfoil profile may be viewed by utilizing a software program known as "VisualFoil Version 4.1" produced and sold by Hanley Innovations/Dr. P. Hanley, Ocala, FL)". A maximally efficient low-speed high-lift airfoil profile is found in the "VisualFoil Version 4.1" software where it is known by the profile name and/or code "NACA-338117". None of the known art has suggested using this profile in any portion of known trawl doors.

The maximally efficient low-speed high-lift airfoil profile having its profile known by the name and/or code "NACA-338117" as found in the "VisualFoll Version 4.1" software program is hereby incorporated by reference.

Considering the need for relatively light weight in water trawl doors that also are highly efficient at deflecting water at a predetermined angle of attack with a minimal of energy consumption, the most efficient conventional pelagic trawl door constructions are trawl door constructions whose profiles are rather thick in width relative to the length of the chord line, such as those thick width profiled trawl doors in the known art mentioned above. The relatively great thickness allows the trawl door to have a rather large volume for a given mass, thereby displacing more water for a given mass, and thus having a relatively low weight in water.

A difficulty presented by the known art is that the most efficient of trawl doors known in the art are rather expensive to manufacture, and thus have not gained as wide use as less expensive alternatives. One of the reasons for the excessive manufacture cost of the most efficient conventional light weight in water trawl doors is that in order to make the trawl doors maximally efficient, it is necessary to make the trawl doors a certain minimum thickness, or width, in relation to their chord length, as mentioned above. For example, light weight in water trawl doors may easily be twenty to thirty centimeters or more in thickness, as opposed to approximately one centimeter in thickness for heavier weight in water trawl doors.

Problematically, using only metal to construct such a thick trawl door of sufficient strength and impact tolerance, even with a hollow metallic shell over a strength and tension bearing frame, results in a trawl door so heavy that it is anchor-like and practically useless for the majority of pelagic fishing vessel requirements. In order to accomplish constructing such a thick trawl door with sufficient durability and impact tolerance, while still generating a buoyancy that assists to maintain the trawl door as well as the remainder of the trawl system at desired water elevations, trawl doors have been constructed of a steel or other metallic shell formed with an internal core of high density foam. Such trawl doors are produced by NET Systems, Inc. (Bainbridge Island, Washington USA). The high density foam fills out most of the void space created by the metallic shell over a steel tension bearing frame. The high density foam is unusually expensive and the manufacture processes used to make such trawl doors are unusually expensive. The steel shell itself is formed from numerous steel plates bent and fixedly welded into position upon a steel framework, the interior void space of such a construction occupied by the foam. The manufacture process employed utilizes a large amount of costly high density foam, more steel than alternatively thinner trawl doors, and a great deal of manpower and machine time. Thus the high cost of such trawl doors.

International patent application No. WO 01/84922 suggests the use of a trawl door having a core and outer covering comprising a cast material which can be a plastic material such as e.g. polyamide and the core material can be closed cell foam.

While the most efficient of known trawl doors are so expensive to manufacture, nonetheless their efficiency at shallow depths is only marginally greater than less expensive, heavier trawl door constructions. Thus, the vast majority of fishing vessels acquire and utilize less efficient trawl doors that are less expensive to manufacture as the thicknesses (widths) of the such trawl doors' main deflector bodies are rather slight.

As evidenced from the above description of the state of the known art, the main difficulty in constructing trawl doors having the most efficient known shape for the main deflector is that due to the rather thick width of the main deflector, much steel must be used to create a shell. The shell either must form a cavity which is in open communication to the water environment to permit sea water to enter and exit the shell so as to neutralize pressures (i.e. it is not a closed space as the shell cannot tolerate high pressure at fishing depths, or else it would be far too heavy and expensive to create), which construction employs much steel and makes the trawl doors too heavy to be widely useful. Otherwise, if buoyancy is desired, much expensive high density foam must be used to occupy the inner void spaces within the steel shell, which construction and contemporaneous manufacture requirements makes the manufacture of the trawl doors too expensive to be widely affordable.

Thus, a long term need has been felt in the industry for a light weight, high efficiency construction of trawl door that both is durable enough to survive the rigors of field conditions while being economic to manufacture.

In response to this long term need felt in the pelagic trawl fishing industry, attempts have been made to manufacture trawl doors with alternative materials to steel or other metallic shells encasing high density foam with the goal of more economically obtaining wide (thick) trawl doors having lighter weights in water without the high material and manufacture costs of foam encased steel shelled trawl doors. For example, attempts have been made by the industry to use synthetic plates bolted to a steel frame, including pre-molded and pre-cut plastic plates and fiberglass plates, with an expectation that the synthetic plates would be sufficiently durable to tolerate the rigors of field conditions. These synthetics were logically selected for use in trawl door construction as a great variety of structural embodiments of such synthetics are in use today, and for a long time have been extensively used with great success in commercial marine applications; including impact absorbing structures, such as vessels' keels and hulls. Care was taken in these attempts to calculate the amounts and dimensions required for the synthetic plates so as to ensure they could well tolerate the actual loads and stresses of field conditions. However, despite the expectation that the synthetic formed trawl doors would tolerate field operations, such trawl doors rather quickly experienced structural failure, both in cold as well as in moderate temperatures, and even when only minimal shocks were experienced, despite the fact that the thickness and other dimensions of the synthetic plating used in place of the metallic plating were calculate and expected to have sufficient strength and durability to survive the rigors of field conditions. An example of such trawl doors were produced at least by Victory Fishing Gear Ltd. (Seattle, USA) and sold under the trade name Victory PolyTrident (See, e.g. Fishing News International, Jan. 1995) but did not gain commercial success. Thus, despite application of the very same materials widely and generally used in impact absorbing marine structures, such synthetic trawl doors failed in operation, with no apparent explanation for such.

Thus, attempts at using synthetics in the exterior shells of trawl doors, or as other impact receiving and bearing structures as well as in tensile force bearing structures of trawl doors have been unsuccessful. Today, the use of synthetic structures in trawl doors either for plating or exterior shells, or as impact or tension bearing structures is considered unfeasible by the industry.

Therefore, the manufacture of trawl doors continues to require metallic plating and frames forming the primary impact bearing and tension bearing structures of trawl doors, and thus lighter than weight, thick-bodied trawl doors continue to be much more expensive while only marginally more efficient than less expensive alternatives, and thus have not been adopted for use by the vast majority of fishing vessels.

Thus, it can be appreciated that there is a long felt need in the industry for an improved, more efficient trawl door capable of being made with lighter-than-steel synthetics in such a way that it is light weight in water, significantly more efficient than alternative trawl door constructions capable of mainly being formed from metals, durable and economical to manufacture.

Thus also, it is apparent that attempted solutions to the problems in the art as described supra, while having improved the state of the art from what existed before implementation of such attempted solutions, have not fully solved the problems In the field, and have only permitted the current state of the art, with its concurrent limitations, as described above.

None of the known art has proposed a trawl door having the superior efficiency, lightness of weight in water nor the features and advantages of the trawl door of the present invention. Thus, the trawl door teachings of the present invention seek to address the problems and limitations inherent in the known art.

### DEFINITIONS

EXTERIOR STRUCTURES OF TRAWL DOORS: means those portions of a trawl door either that are (i) in communication with the outside or ambient environment; or (ii) only separated from the outside or ambient environment by a coating itself insufficiently durable to withstand without the additional support of further structure repeated impacts resultant of normal fishing operations, examples of such a coating including paints, lacquers, veneers, coatings, artificial skins or the like.

FRONT OF CENTER: means more proximal to the leading edge of the profile of a particular portion of a trawl door than the trailing edge of that same particular trawl door portion's same profile.

RECEIVE(S) IMPACTS FRACTURE FREE: means the ability of receiving collisions and other blows occurring during normal trawl fishing operations, including at the range of temperatures found in and about the surfaces of the world's seas and oceans, without incurring or developing fractures, despite possibly experiencing denting, marking, scuffing, scratching, chipping or other sculpting or ejection of material due to receiving such collisions and other blows.

### COLLISIONS AND OTHER BLOWS OCCURRING DURING NORMAL TRAWL FISHING

OPERATIONS: means those collisions and other blows experienced by a trawl door during trawl fishing operations that are not so severe as to cause the fracture and/or cracking of a conventional high quality trawl door constructed of a high quality steel and/or other metal alloy, but may be sufficiently severe so as to cause the fracture and/or cracking of prior trawl doors employing synthetics in their exterior structures. '

PROFILE: means the cross sectional shape of a trawl door or of a portion of a trawl door as viewed in a plane perpendicular to the vertical dimension of the trawl door.

TRAWL DOOR: means any of a variety of essentially rigid structures having generally rigid deflectors (e.g. not formed of a foldable fabric as a kite) and capable of being deployed in a body of water behind a towing vessel, and usually attached at a fore end to a terminal end of a main towing warp or other towing line depending from the towing vessel and at an aft end to another line itself ultimately attached to another towed item. In operation, trawl doors have the function of converting a portion of forward motion and/or energy that is imparted by the towing vessel into horizontally directed force for the purpose of spreading in a generally horizontal orientation a trawl net, seismic surveillance towed array complex, paravane line or the like.

### OBJECTS OF THE PRESENT INVENTION

It is an object of the present invention to provide for a trawl door construction employing synthetic lighter-than-steel materials while being durable enough to survive the rigors of the field environment, thereby fulfilling a long term need felt in the industry.

It is another object of the present invention to provide for a trawl door construction that can permit the operator to vary the amount of spreading force generated by the trawl door while simultaneously maintaining optimal hydrodynamic efficiency.

It is yet another object of the present invention to provide for a trawl door that maximizes the proportional distance along the outer surface of the trawl door along which laminar flow is regularly capable of occurring, thereby maximizing toward the trailing edge of the trawl door the point at which a laminar flow layer separates from the outer surface of the trawl door, thereby minimizing trawl door cavitations and resistance.

It is yet another object of the present invention to provide for a trawl door that is capable of generating at lower angles of attack the same proportional amount of outward directed thrust as the most efficient conventional trawl doors, consequently experiencing less water resistance generated for a given amount of outward thrust compared to the most efficient conventional trawl doors, thereby significantly improving the efficiency of the trawl door and concurrent fishing operations.

It is yet another object of the present invention to provide for a trawl door that is capable of operating with substantially higher efficiencies at lower angles of attack than known trawl doors, thereby permitting more economical modern high speed trawling operations With lowered water resistance, low cavitations and maximal efficiency.

It is yet another object of the present invention to provide for a trawl door that attains all objects of the present invention described supra while also exhibiting significantly improved efficiency over known trawl door constructions while concurrently being economical and simple to manufacture, thereby increasing affordability and usefulness to the entire range of modern drawling vessels.

### BRIEF SUMMARY OF THE INVENTION

The present invention is based upon the discovery that impact receiving and especially exterior portions of trawl doors may usefully be formed from synthetic materi6is capable of forming structures that withstand impacts resultant of normal trawl fishing operations without exhibiting fractures. Normal trawl fishing operations are those trawl fishing operations that would not fracture a standard, well constructed high quality steel and/or other metal alloy trawl door. Trawl doors of the present invention employ synthetics that receive impacts fracture free in order to form the exterior structures and tensile load bearing structures of modern trawl doors, including impact bearing structures of modern trawl doors, with no compromise in trawl door performance and longevity.

In one aspect, the present invention in based upon the surprising discovery that a substantially more efficient trawl door may be created wherein the trawl door includes at least one and preferably two lift enhancing structures disposed forward of the leading edge of a single main deflector body, and the main deflector has a profile wherein:
(i) the outer side surface of said main deflector body exhibits greater camber than does the inner side surface of said main deflector body;
(ii) the thickest part of the profile of said main deflector body is located front of center;
(iii) the outer side surface is convex and the inner side surface is concave.

These and other features, objects and advantages should be apparent to those of ordinary skill in the art from the following detailed description of the preferred embodiments and as illustrated in the various drawing figures.

### BRIEF DESCRIPTION OF THE DRAWINGS

FIG. 1 is an aspect view of the trawl door of the present invention as viewed from behind and looking at the inner side surface of the trawl door of the present invention.
FIG. 2 is a view of one of the deflector bodies shown in FIG. 1, where the tensile load bearing structure incorporated within one of the deflector bodies of the trawl door of the present invention is described in more detail.
FIG. 3 is a plan view of the profile of the main deflector body of the trawl door of the present invention.
FIG. 4 Is an aspect view of a modification to the trawl door shown in FIG. 1.
FIG. 5 is a plan view of the profile of a trawl door shown in FIG. 1 and also showing a modification to the door shown in FIG. 1.

### DETAILED DESCRIPTION

As mentioned above, it has surprisingly been found by the inventors that certain synthetic materials having the particular property of being able to withstand impacts fracture free can be used in the manufacture of light-weight high-strength trawl doors as described herein.

The synthetic material comprises preferably a polyamide (nylon) combined with an elastomer in such a ratio as to provide a material that withstand impacts fracture-free. Polyamides (or Nylons), are known polycondensates of for example aliphatic dicarboxylic acids containing 4-12 carbon atoms with aliphatic diamines containing 4-12 carbon atoms and/or lactams containing 4-12 carbon atoms.

Examples of polyamides are: polyhexamethylene adipamide (nylon 6,6), polyhexamethylene azelamide (nylon 6,9), polyhexamethylene sebacamide (nylon 6,10), polyhexamethylene lauramide (nylon 6,12), polytetramethytene adipamide (nylon 4,6), polycaprolactam (nylon 6) and polylaurinolactam (nylon 12). The diamines and/or dicarboxylic acids can also be aromatic.

Polyamides can also be built up of two or more dicarboxylic acids and/or two or more diamines, or of two or more lactams, while they can also consist of mixtures of two or more polyamides.

Preferably, the polyamide is Nylon-6 shown in Formula (I), obtainable by polymerization of caprolactam.

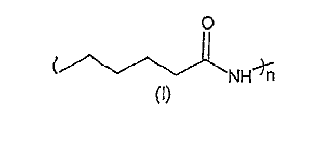

In useful embodiments the polyamide and elastomer form a copolymer, e.g. a block copolymer with alternating blocks of polyamide segments 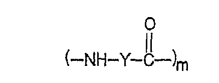 wherein Y is an alkylene group and m is an integer greater than one, and residues of elastomeric polymers, such as e.g. polyethers, hydrocarbons, polyesters, polysiloxanes or combinations thereof. Nylon copolymers and processes for their productions are disclosed in e.g. U.S. patent No. 4,617,355; U.S. patent No. 4,590,243, and patent application WO 94/17124.

Suitable elastomers include polyolefin elastomer or plastomer especially a polyolefin elastomer or plastomer made using a single-site catalyst system (for example a homogeneously branched ethylene polymer such as a substantially linear ethylene interpolymer or a homogeneously branched linear ethylene interpolymer).

Generally suitable polyolefins include, for example, polyethylene (ethylene homopolymer), ethylene/alpha-olefin interpolymers, alpha-olefin homopolymers, such as polypropylene(propylene homopolymer), alpha-olefin interpolymers, such as interpolymers of polypropylene and an alpha-olefin having at least 4 carbon atoms.

Representative polyolefins include, for example, but are not limited to substantially linear ethylene polymers, homogeneously branched linear ethylene polymers, heterogeneously branched linear ethylene (including linear low density polyethylene (LLDPE), ultra or very low density polyethylene (ULDPE or VLDPE) medium density polyethylene (MDPE) and high density polyethylene (HDPE)), high pressure low density polyethylene (LDPE), ethylene/acrylic acid (EAA) copolymers, ethylene/methacrylic acid (EMAA) copolymers, ethylene/acrylic acid (EAA) ionomers, ethylene/methacrylic acid (EMAA) ionomers, ethylene/vinyl acetate (EVA) copolymers, ethylene/vinyl alcohol (EVOH) copolymers, polypropylene homopolymers and copolymers, ethylene/propylene polymers, ethylene/styrene interpolymers, graft-modified polymers (e.g., maleic anhydride grafted polyethylene such as LLDPE g-MAH), ethylene acrylate copolymers (e.g. ethylene/ethyl acrylate (EEA) copolymers, ethylene/methyl acrylate (EMA), and ethylene/methmethyl acrylate (EMMA) copolymers), polybutylene (PB), ethylene carbon monoxide interpolymer (e.g., ethylene/carbon monoxide (ECO), copolymer, ethylene/acrylic acid/carbon monoxide (EAACO) terpolymer, ethylene/methacrylic acid/carbon monoxide (EMAACO) terpolymer, ethylene/vinyl acetate/carbon monoxide (EVACO) terpolymer and styrene/carbon monoxide (SCO), chlorinated polyethylene and mixtures thereof.

There are numerous methods of preparing nylon block copolymers. One general procedure involves the use of prepolymerized elastomeric polymers (polymers which provide elastomeric segments in nylon block copolymers) and lactam monomer wherein the elastomeric polymeris prepared so as to have a lactam initiator group from which additional lactam monomer polymerizes to form polyamide segments. The lactam initiator group may be an acyl lactam group which is a known initiator of lactam polymerization.

Examples of suitable Lewis acid catalysts are bromomagnesium lactamate, magnesium bislactamate, magnesium acetyl acetonate, magnesium salts of organic carboxylic acids such as I magnesium stearate, magnesium chloride, calcium ethoxide, calcium lactamate, calcium acetyl acetonate, barium lactamate, barium chloride, barium acetyl acetonate, zinc chloride, zinc acetyl acetonate, zinc lactamate, cadmium chloride, cadmium acetyl acetonate, cadmium lactamate, boron acetyl acetonate, aluminium trilactamate, aluminium chloride, chloroaluminium dilactamate, lactam aluminium chloride, tin II chloride, tin II ethoxide, tin II acetyl acetonate, titaniumtrichloride, titanium (III) acetyl acetonate, titanium (III) ethoxide, vanadium (III) ethoxide, vanadium (III) acetyl acetonate, vanadium (III) chloride, chromium (III) chloride, chromium (III) acetyl acetonate, iron (III) chloride, iron(II) acetyl acetonate, ferrous acetyl acetonate, cobalt (II) chloride, cobalt(II) acetyl acetonate, nickel acetyl acetonate, nickel chloride, chromium (III) acetate, copper(II) acetyl acetonate.

Preferably, as Lewis acid use is made of magnesium bislactamates such as caprolactamate and/or pyrrolidonate.

In the preparation of the polyamide elastomer copolymers it can be useful to carry out the polymerization in the presence of one or more compounds normally applied in nylon block copolymers, such as, plasticizers, flame retardants, stabilizers and reinforcing materials such as mica or glass fibers.

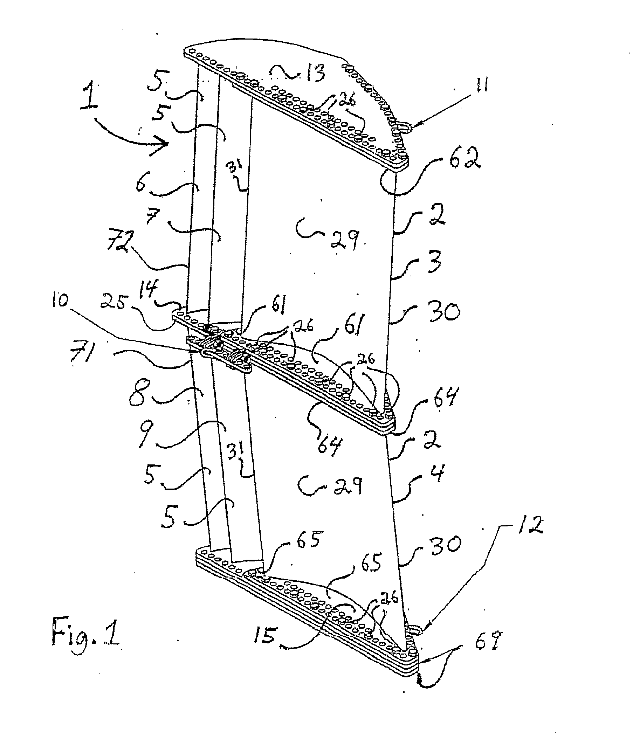

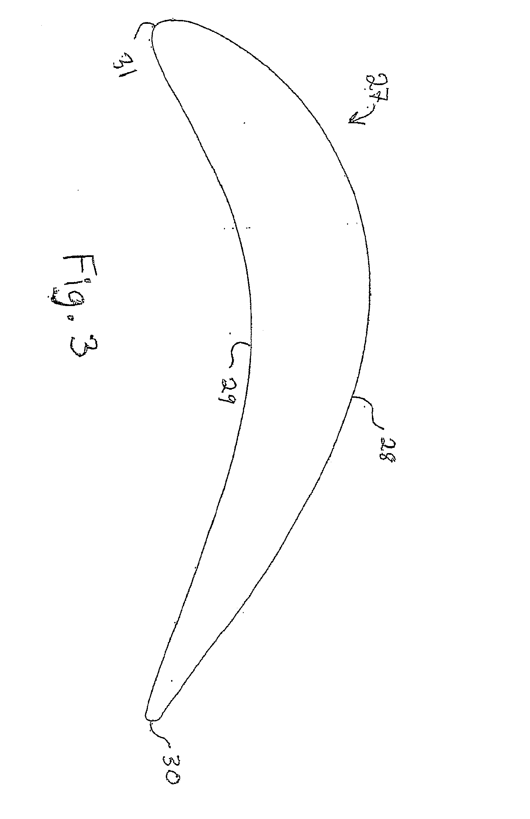

As shown in FIG. 1, a preferred form of trawl door 1 of the present invention is a "V" shaped trawl door, as evident to those ordinarily skilled in the art. A starboard side trawl door is shown but, as also evident to those ordinarily skilled in the art, there will be a corresponding port side trawl door. Each door includes main deflector body 2 formed by upper deflector body portion 3 and lower deflector body portion 4. Each of upper and lower deflector body portions 3 and 4 include a convex outer side 28 (see FIG. 3), concave inner side 29, trailing edge 30 and leading edge 31. Disposed forward of each body portion 3 and 4 is a lift enhancing arrangement including upper forward leading slat 6 and upper forward trailing slat 7, as well as lower forward leading slat 8 and lower forward trailing slat 9. The slats may be formed, made and arranged in any fashion as know in the art.

Trawl door 1 of the present invention includes conventional tow point connection hardware including towing warp connector 10 as well as upper and lower trawl net bridle connection rings 11 and 12, respectively.

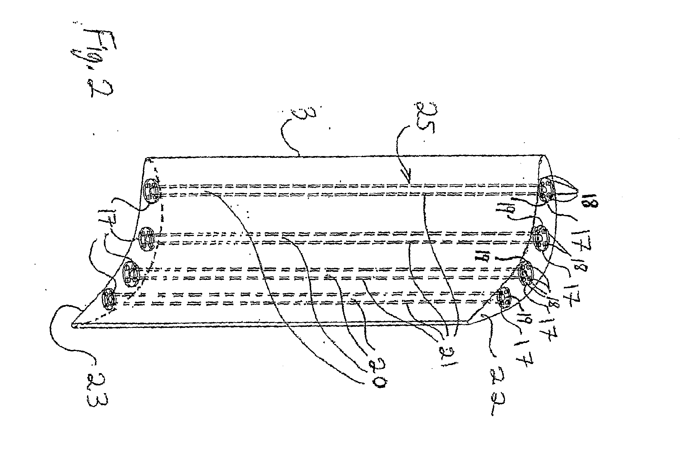

Towing warp connector 10 is attached to center tension bearing plate 14, which communicates tensional loads to upper and, lower bridle connection rings 11 and 12, respectively, that are located on upper and lower tension bearing plates 13 and 15, respectively, through a load and tension transmitting and carrying structure that is partially enclosed within upper and lower deflector bodies 3 and 4, respectively (see FIG. 2), as is described more fully below.

Slats 5 preferably fit into slots (not shown) that are cut partially into tension bearing plates 13, 14 and 15, so as to act as "female ends" to the "male end" of any particular spoiler. The slots have a shape that accommodates the profile of any particular slat where it passes through any particular tension bearing plate 13, 14 or 15. The slats are kept in position by the remainder of the structure of the trawl door 1 of the present invention, which prevents the tension bearing plates 13, 14 and 15 from moving away from one another. Additionally, slats 5 may be welded into place, such as by spot welding.

Located between upper deflector body 3 and center tension bearing plate 14 is upper deflector lower load bearing end-plate 61, while located between upper deflector body 3 and upper tension bearing plate 13 is upper deflector upper load bearing end-plate 62. Similarly, located between lower deflector body 4 and center tension bearing plate 14 is lower deflector upper load bearing end-plate 64, while located between lower deflector body 4 and lower tension bearing plate 15 is lower deflector lower load bearing end-plate 65. Bolts 26 permanently attach load bearing end-plates 61, 62, 64 and 65 to tension bearing plates 13 14 and 15, and may have their bolt heads welded into position after being thoroughly threaded into place.

One or more of a series of weight plates 69 are optionally attached to the lower surface of lower tension bearing plate 15, where either one or more weight plates 69 may permanently be attached, or may temporarily be attached and include a variety quantities, sizes (especially differing in thickness) and/or a variety of masses so as to permit selectively adjusting the mass of weight at the bottom of trawl door 1 and thus the ballast aiding to maintain a vertical orientation of trawl door 1 during field operations.

As shown in FIG. 2, a deflector body of the present invention and/or deflector bodies of the present invention as represented by upper deflector body portion 3 are preferably formed with hollow internal load bearing members 20 (e.g. tubes) having walls 21 and extending from the upper surface 22 of the deflector body to the lower surface 23 of the deflector body. Flanges 17 are permanently affixed to the distal ends of hollow internal load bearing members 20 and include threaded holes 18. Flanges 17 are sunk into the synthetic portion of the deflector body so that exterior surfaces 19 of flanges 17 are seated flush with (e.g. are co-planar with) the upper and lower surfaces 22 and 23 of the deflector body. Plugs (not shown) seal otherwise open ends of hollow internal load bearing members 20 proximal flanges 17, while not extending beyond flanges 17, so that hollow internal load bearing members 20 are closed to the ambient and/or external environment, thereby prohibiting entry of seawater into hollow internal load bearing members 20, thereby also generating increased trawl door buoyancy, as well as constant trawl door buoyancy at varying water depths. The load bearing members 20 and proximal flanges 17 are preferably made from a strong and rigid material, e.g. stainless steel or a suitable metal alloy that can be selected by the skilled person.

In order to permit towing tensions to be transmitted from towing warp connector 10 to upper and lower bridle rings 11 and 12, flanges 17 disposed at the lower surface 23 of deflector body 3 are preferably permanently attached to upper deflector lower load bearing end-plate 61 by means of threaded bolts (not shown) being screwed and/or threaded into threaded holes 18. The threaded bolts (not shown) have a bolt head that is sunk into flanges 17 (such as by being sunk into an enlarged portion at the external end of threaded holes 18) so as not to protrude beyond the level of the exterior surface of upper deflector lower load bearing end-plate 61, and are fixedly welded into position, so as to prevent unscrewing of the bolts. In similar fashion, flanges 17 disposed at upper surface 22 of deflector body 3 are likewise attached to upper deflector upper load bearing end-plate 62.

Similarly and in "mirror-image" fashion, but not shown, the upper surface and lower surface of lower deflector body 4 are likewise similarly attached by same means to central tension bearing plate 14 and lower tension bearing plate 15, respectively.

In operation, towing forces generated by the propeller of the towing vessel are transmitted through the towing warps, to:
towing warp connector 10, then
along central tension bearing plate 14, then
simultaneously both to upper deflector lower load bearing end-plate 61 as well as to lower deflector upper load bearing end plate 64, then
through flanges 17 both that are disposed at the lower surface 23 of upper deflector body 3 as well as flanges 17 that are disposed at the upper surface of lower deflector body 4, then
along hollow internal load bearing tubes 20 that are located within both lower and upper deflector bodies 3 and 4, then
through flanges 17 that are disposed both at the upper surface 22 of upper deflector body 3 as well as flanges 17 that are disposed at the lower surface of lower deflector body 4, then
simultaneously to upper deflector upper load bearing end-plate 62 as well as to lower deflector lower load bearing end-plate 65, then
simultaneously both to upper tension bearing plate 13 as well as to lower tension bearing plate 15 connecting to upper and lower bridle connection rings 11 and 12, respectively, which either pull on the trawl's upper and lower starboard bridle, respectively, or on the upper and lower leg, respectively of a "Vee" bridle rig, for example. It is understood that bolts welds and/or other hardware connecting the various components mentioned above participate in load and tension transmission whenever applicable and wherever they are so located.

Thus, a tension bearing frame and/or a load bearing frame 25 (see FIG. 1) is formed by the complex of interconnected towing warp connector 10; tension bearing plates 13, 14 and 15; load bearing end-plates 61, 62, 64 and 65; hollow internal tubes 20 having flanges 17 with bolts threaded into threaded bolt holes 18 and passing through and interconnectinglflanges 17 to load bearing end plates 61, 62, 64 and 65 and thus to tension bearing plates 13, 14 and 15, towing warp connector 10 and bridle connection rings 11 and 12.

In an alternative embodiment, tension towing upon the trawl net may mainly transmit directly from towing warp connector 10, through central tension bearing plate 14 to a single bridle connection ring located along the aft portion of central tension bearing plate 14, and not shown. In such an embodiment, tension and other load forces are still transmitted along the remainder of the tension bearing frame, however such loads primarily originate from water resistance, impacts with the trawling vessel during field operations, as well as from stabilizer lines that may connect to upper and lower bridle rings 11 and 12, respectively.

In order to manufacture either a single integral main deflector body (not shown) or upper or lower deflector body portions 3 or 4 of the preferred form, the following steps are employed:

For example, in order to manufacture a complete upper deflector body 3 including hollow internal load bearing tubes 20 with flanges 17 having threaded holes 18; a polyamide chemically mixed with an elastomer in such a weight ratio of the polyamide to the elastomer as to create a fluid synthetic material that permits upon complete solidification of the synthetic material a solid synthetic structure that receives impacts fracture free is poured while in a fluid state Into an essentially uniformly heated hot mold of a predetermined shape of a deflector body.

Presently preferred embodiments of the invention make use of nylon-elastomer copolymers made with reaction injection molding technology. Materials for such processing are available from Brüggeman Chemical KG (Heilbronn, Germany) sold under the trade name NYRIM®. In NYRIM^{®}, the Nylon and elastomer phases are chemically bounded. The chemically bounded but incompatible Nylon and elastomer blocks make a semi-crystalline material. By this morphology the Nylon-6 properties are complemented with toughness and resilience from the elastomer blocks. NYRIM^{®} polymers are typically processed via RIM (Reaction Injection Molding) processing or casting. Nyrim can also be rotomolded.

In NYRIM processing liquids with very low viscosities are processed under low pressures. The polymerization starts after the liquids enter the mold. Because of these low viscosities very complex parts can be made successfully with very low stress levels in the final part.

RIM processing is the preferred method to manufacture large, complex or thick parts. RIM processing allows for large design flexibility. Pressures are a little above atmospheric, resulting in lower mold and manufacturing costs. Glass fiber reinforcement or particulate mineral fillers can be used in Nyrim processing. NYRIM is formulated with elastomer contents from 7% (NYRIM 700) up tp 40% (NYRIM 4000).

In said system, a synthetic material that is poured into the hot mold while in a fluid and/or liquid state is a nylon-precursor combined with an elastomer as well as a catalyst and/or polymerization additive(s) used for anionic polymerization of a lactame into Nylon. Yet more specifically, to form the solid synthetic material for trawl doors of the present invention, one preferably pours AP-Caprolactam and an elastomer and a catalyst into the mold. After pouring and when the temperatures of the mixture and the mold temperature are sufficiently hot this mixture reacts anionically to form a polymer that is a cast polymer, and when using caprolactam as a raw material this cast polymer is either a cast nylon or a cast "NYRIM". The polymerization of the raw materials causes the liquids to solidify into a polymer, and the anionic polymerization of the lactame into the Nylon results in a solid synthetic material for synthetic portions of the trawl door that receive impact fracture free.

The raw materials in the case of "NYRIM" are as follows, and are all available from Brüggemann Chemical as well as other suppliers, which provide producers with information and instructions on how to use these materials to form a solid synthetic material known as "NYRIM" for use in synthetic portions of trawl doors of the present invention:
* AP Caprolactam (the monomer forming nylon-6);
* Catalyst C (MgBr lactamate)
* Prepolymer P1-30 and or P1-20A (the elastomer component in the resulting copolymer)

In the case of the above instant example of a reaction, the polymer that is being formed is in a solid state because it only melts at temperatures above 220°C, and the temperatures during the reaction only get as hot as 205°C. That is, in the case of the above instant example of a reaction, the polymer that is being formed is in a solid state because it is formed by a reaction occurring at a temperature that is lower than the melting point of the polymer.

Thus, it is important to provide a temperature for the anionic polymerization of the lactame into the Nylon (or other polymeric material) at a temperature that is below the melting point of the Nylon, e.g. below 220°C (or below the melting point of another polymeric material being formed by the anionic polymerization of a lactam.)

Catalyzed anionic polymerization of AP-Caprolactam into Nylon results in a solid synthetic material having rather low internal stresses, and therefore being significantly better able to receive impacts. As disclosed herein, it is preferred that the solidified polymeric Nylon be mixed with an elastomer

Lactames that can be used for anionic polymerisation are, for example: caprolactam, laurinolactam, and mixtures of these two.

Preferably, the elastomer content of the nylon-elastomer mixture is in the range of 5-40%. In certain embodiments the elastomer is up to twenty percent (20%) of the weight of the mixture making up the synthetic material including about 15% or about 20%, with from sixteen percent (16%) to eighteen percent (18%) being preferred, and most preferred being sixteen and seven tenths percent (16.7%), with eleven and one tenths percent (11.1%) as well useful. However, for some trawl doors no elastomer is needed, or as little as two percent elastomer is needed, so long as the polymerization of the lactam into Nylon is an anionic polymerization.

It is anticipated that another polymeric substance and/or another organic polymer may substitute the Nylon, depending upon experimental verification of the suitability of any particular polymeric substance. In the case of other precursors to polymeric substances, it is most preferred that the polymerization be a cast polymerization.

Situated within the hot mold are hollow internal load bearing tubes 20 having flanges 17 with threaded holes 18, already arranged, disposed and fixedly positioned within the hot mold so that after pouring in the fluid synthetic material capable of forming a Nylon chemically mixed with an elastomer, the synthetic material solidifies around and permanently encloses and incorporates hollow internal load bearing tubes 20 with flanges 17 having threaded holes 18. It is anticipated that a plate or plates may replace the tubes for portions of frame 25.

In other embodiments of the present invention, a portion of the trawl door may be machined (including sculpted and/or carved) from a block of the solidified synthetic material. Automated carving using computer controlled machining equipment is preferred. For example, a block of the solid synthetic material may be made by molding, even with void spaces inside of it to accommodate structure, any portion of frame 25, electronics or other tools, or to create void space for buoyancy. Then, the block may be machined into the desired shape of a portion of the trawl door, such as into the shape of one of the deflector's for use in the trawl door of the present invention.

Thus, the present invention provides for:
An improved method for producing a trawl door using synthetic materials, the method comprising steps selected from a group consisting of:
   a fabricating a portion of the trawl door by a process which includes the steps of:
      i) forming a mold cavity that is shaped generally to form at least a portion of the trawl door;
      ii) situating into the mold cavity that is shaped generally to form a least a portion of the trawl door a liquid synthetic material capable of solidifying to form a solid synthetic material capable of receiving impacts fracture free; and
      iii) curing the liquid synthetic material in the mold cavity to form the solid synthetic material forming at least a synthetic portion of the trawl door which receives impacts fracture free;
   b. fabricating a portion of the trawl door by a process which includes the steps of:
      i) forming a mold cavity that is shaped generally to form at least a portion of the trawl door;
      ii) situating into the mold cavity that is shaped generally to form a least a portion of the trawl door a liquid synthetic material capable of solidifying to form a solid synthetic material having polymeric material mixed with elastomeric material in a certain ratio; and
      iii) curing the liquid synthetic material in the mold cavity to form the solid synthetic material having the polymeric material mixed with the elastomeric material, the ratio of the polymeric and elastomeric materials providing solid synthetic material for at least a synthetic portion of the trawl door which receives impacts fracture free;
   c. fabricating a portion of the trawl door by a process which includes the steps of:
      i) placing at least a portion of a load bearing frame (25) in a predetermined position in a mold cavity that is shaped generally to form at least a portion of the trawl door;
      ii) situating into the mold cavity containing the at least a portion of the load bearing frame a liquid synthetic material capable of solidifying to form a solid synthetic material having polymeric material mixed with elastomeric material in a certain ratio; and
      iii) curing the liquid synthetic material in the mold cavity to form the solid synthetic material having the polymeric material mixed with the elastomeric material, the ratio of the polymeric and elastomeric materials providing solid synthetic material for at least a synthetic portion of the trawl door which receives impacts fracture free;
   d. fabricating a portion of the trawl door by a process which includes the steps of:
      i) situating into a mold cavity a liquid synthetic material capable of solidifying to form a solid synthetic material having polymeric material mixed with elastomeric material in a certain ratio;
      ii) curing the liquid synthetic material in the mold cavity to form the solid synthetic material having the polymeric material mixed with the elastomeric material, the ratio of the polymeric and elastomeric materials providing solid synthetic material for at least a synthetic portion of the trawl door which receives impacts fracture free;
      iii) machining the solid synthetic material at least generally into a desired shape of the at least a portion of the trawl door, whereby trawl door durability, lightness of weight in water, longevity and ease of manufacture are improved,

Furthermore, the present invention additionally provides for an improved method for producing the trawl door of the present invention wherein the step described in the above i mentioned method, of pouring into the mold cavity said liquid synthetic material capable of solidifying to form the solid synthetic material having the polymeric material mixed with the elastomeric material, includes the further step of selecting as the liquid synthetic material a material capable of solidifying to form solid synthetic material having as the polymeric material at least a polyamide, and preferably Nylon-6. Other polyamides, such as the above mentioned may as well be used. Particularly preferred are mixtures of polymeric material (preferably polyamides) and an elastomer that become chemically bonded as a copolymer. Such mixtures are suitably as described above, e.g. with regard to type of polymer, elastomer and ratio of polymer to elastomer.

Furthermore, the present invention additionally provides for an improved method for producing the trawl door of the present invention wherein the step described in the above mentioned method of pouring into the mold cavity containing the portion of the load bearing frame liquid synthetic material capable of solidifying to form the solid synthetic material having the polymeric material mixed with the elastomeric material includes the further step of selecting as the liquid synthetic material a material capable of solidifying to form solid synthetic material having as the polymeric material at least a polyamide, and preferably Nylon-6. Other polyamides may as well be used such as described above, and mixtures forming copolymers with elastomers, as described in detail above.

In one aspect of the presently preferred embodiment, when creating the mold, the interior side of the mold corresponding to the convex outer side of the trawl door is made so as to maximize velocity of the layer of water such as by being as smooth as possible. Oppositely, the interior side of the mold corresponding to the concave inner side of the trawl door may be made rough or otherwise irregular so as to impede and slow down water flow, thereby increasing lift. To further increase spreading forces, at least the convex outer side of the trawl door's deflector(s) may as well be coated with a very low friction substance, including a low friction coating, Teflon or other material.

Due to the fact that there is more than one hollow internal load bearing tube 20 included in the portion of load bearing frame 25 encased within the synthetic portion of the trawl door, the deflector body formed around the multiple hollow internal load bearing tubes 20 is unable to rotate relative to the complex of hollow internal load bearing tubes 20 forming a portion of the tension and/or load bearing frame 25 (see FIG. 2) encapsulated within the synthetic portion of the deflector body. A great variety of structures may be employed for the tension and/or load bearing frame encapsulated within the synthetic portion of a deflector body, so long as the shape of the encapsulated tension and/or load bearing frame 25 prevents its rotation or movement within and relative to the synthetic portion of the deflector body.

Due to the fact that the trawl door shown in FIG. 1 is a "V" door, the upper portions of the trawl door, including upper deflector 3 and upper slats 6 and 7, lie in a plane different than that plane within which lie the lower deflector 4 and lower slats 8 and 9.

FIG. 3 shows to scale or essentially to scale a preferred profile 27 of a main deflector body of a trawl door 1 of the present invention, as used in the instant example of the trawl door of the present invention to form the profiles of upper and lower deflector bodies 3 and 4, respectively. The complete shape and teachings of the profile 27 shown in FIG. 3 are the same as the profile for that maximally efficient low-speed high-lift airfoil profile having its profile known by the name and/or code "NACA-338117" as found in the "VisualFoil Version 4.1" by Hanley Innovations (Ocala Florida, USA). As noted, none of the known art has suggested using this profile in any portion of known trawl doors.

In further description, profile 27 includes convex outer side 28, concave inner side 29, trailing edge 30 and leading edge 31. Trailing edge 30 is the most aft portion of any deflector body of the present invention as disposed in the trawl door of the present invention, and leading edge 31 is the most forward portion of any deflector body of the present invention as disposed in the trawl door of the present invention. The widest point of the profile 27 is approximately seventeen percent to eighteen percent (17% to 18%) of the length of the profiles chord, and is at least eleven percent (11%) of the length of the profiles chord, and is located front of center of the profile's chord. Preferably, the widest point of the profile is located at a point along the profiles chord that corresponds to a distance that is front of center of the chord by at least three percent (3%) of the chord's length.

As noted in PIG. 1, disposed forward of the leading edge 31 of a main deflector body or any deflector body of the present invention, is a lift enhancing arrangement 5. Preferably, at least one slat is employed with any main deflector body of the present invention having the profile taught hereinabove. None of the known art has suggested using slats in combination with a deflector body having a profile similar to the shape of the profile taught herein as most preferred for the shape of the profile of any main deflector body for use in a trawl door of the present invention.

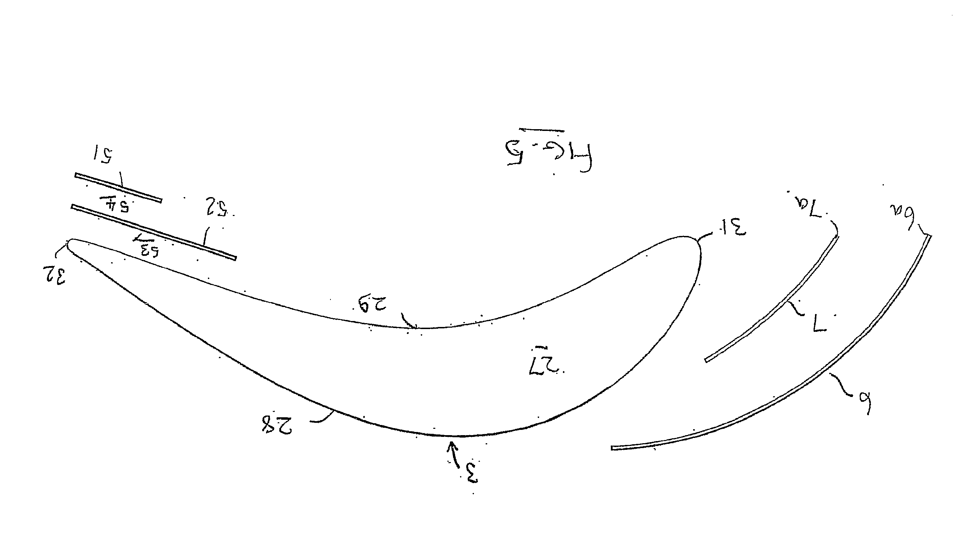

As shown in Fig 5, the upper forward leading slat 6 has a profile generally the same as the profile of the other side 28 of the body portion 3 at an area proximal the widest point of the profile 27 and is held spaced from the leading edge 31 by being fixed into the tension plates 13,14 with the leading edge 6a of the slat 6 in fine with the leading edge 31 of the body portion. As shown, the leading edge 6a of the slat 6 is spaced from the leading edge 31 by the same distance as the leading edge 6a is spaced from the widest point of the profile 27. The length of the slat 6 is such that it is above the top surface of the profile 27 and because of the differences in profile as between the slat 6 and the portion of the profile between its leading edge and the top of the profile 27, a slot is formed along the length of the leading edge 31. The slat diminishes in area as one moves from the leading edge 31 along the profile 27 and this formation channels water flowing through the slot to energise the boundary layer about the profile 27 and retain separation of the boundary layer which increases lift as explained previously.

It is preferred to further accentuate this lift by adding the upper forward trailing slat 7.

This slat 7 is located in the slot formed by the spoiler 6 and has a leading edge 7a in line with the leading edges 6a and 37 as well as a profile which is generally the same as the profile of the outer side 28 at an area defined as rearward of the leading edge 31 but forward of the widest point of the profile 27. The slat 7 thus divides the slot along the leading edge 31 into two which enhances the energisation of the boundary layer. The slat 7 is shorter than the slat 6 being about 50% of the length of the slat 6 and so does not extend above the top surface of the profile 27.

Fig 5 also shows a modification which maybe made to the trawl door as shown in Fig 1. This modification comprises the provision of a trailing edge lift enhancing structure in the form of one or more trailing edge slats 51 and 52 located under the profile 27 which form inner and outer trailing edge slots 53,54. The trailing edge slat or slats 51,52 are generally flat and extend along the length of the trailing edge 32 and are fixed to the tension plates 13,14. They lie generally parallel of the portion of the concave inner side 29 proximal the trailing edge 32 of the profile 27. The slat 51 is approximately half the length of the slat52 and their trailing edges 51a,51b are generally aligned with the trailing edge 32 of the profile 27. These slats maintain the boundary layer effects of the water on the concave inner side 29 of the profile which also enhances the performance of the profile 27.

It is to be understood that each body portion of the trawl door will be provided with the leading edge slat arrangement shown in Fig 5 and may be also provided with the trailing edge slat arrangement if desired. What is done for one trawl door is done to the other in order to generate stable conditions.

Such a construction of a trawl door of the present invention has been shown to be useful in field operations when the angle of attack of the trawl door is 18 (eighteen) degrees, allowing much reduced drag. Similarly, while at conventional angles of attack used with known trawl doors, such a trawl door construction also produces at least 15 (fifteen) percent greater efficiency than any other known trawl door constructions. These superior results lead to substantially greater efficiency of fishing operations and have never been achieved by known trawl door constructions.

Additional, the spoilers themselves may have profiles similar to that profile shown in FIG. 3 and 5 and may also be formed from a synthetic material that upon solidification forms a structure that receives impacts fracture free.

### Variable Spreading Force Embodiments

In order to more fully attain the objects of the present invention, the trawl door of the present invention provides for a new and useful method for varying the spreading force capable of being generated by a trawl door while simultaneously maintaining an optimal angle of attack for the trawl door, thus maintaining optimal hydrodynamic efficiency for any trawl door of the present invention while simultaneously varying the amount of spreading forces capable of being generated by such trawl door.

In further reference to Figs 1 and 2, trawl door 1 of the present invention has a lower trawl door portion 71 and an upper trawl door portion 72, whether it is a "V" door or otherwise, and whether or not it has a central tension bearing plate or like hardware, or otherwise. In the absence of a "V" shaped trawl door, the lower and upper portions 71 and 72 each correspond to the lower and upper half of the particular trawl door.

In the example of the presently preferred embodiment of trawl door 1 of the present invention, lower trawl door portion 71 is defined as including all structures taught and shown herein for trawl door 1 of the present invention that both include central tension bearing plate 14 and also are situated below central tension bearing plate 14, excepting towing warp connector 10, bridle connection ring 12 and weight plates 69, and may be of varying sizes and surface area. Similarly, upper trawl door portion 72 includes all structures as taught and shown herein for trawl door 1 of the present invention that both include central tension bearing plate 14 and also are situated above central tension bearing plate 14, excepting towing warp connector 10 and bridle connection ring 11, and also may be of varying sizes and surface area.

However, in a trawl door embodiment of the present invention lacking a central tension bearing plate 14, both lower and upper trawl door portions 71 and 72, respectively, would correspond to the general shape and structure of the entire trawl door, and may be of varying sizes so as to provide varying amounts of surface area.

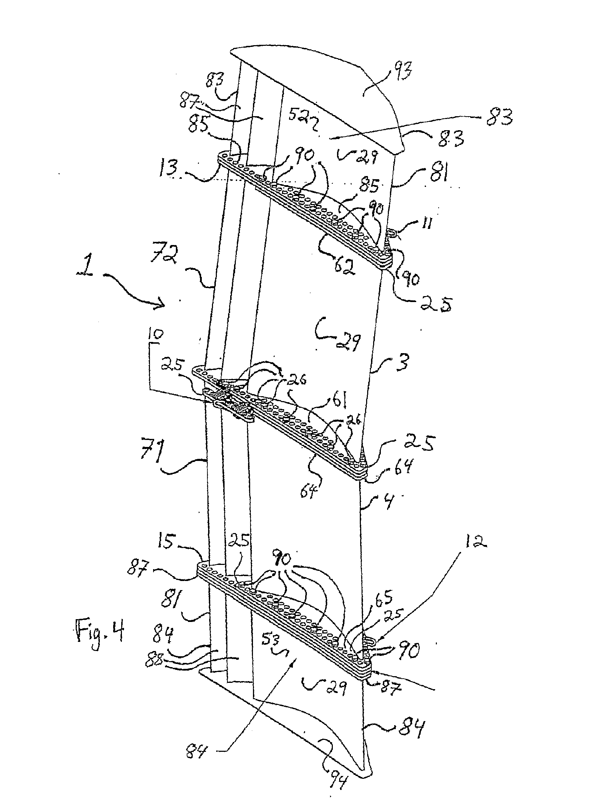

As referenced in Fig. 4, in order to permit varying the amount of spreading force capable of being generated by trawl doors of the present invention while simultaneously maintaining a constant angle of attack as is necessary for optimum hydrodynamic efficiency of trawl doors of the present invention, a modification in the form of trawl door extension pieces 81 are usefully temporarily attached to the top and bottom ends of trawl door 1, so as to increase the size of trawl door 1, and thus increase the amount of spreading force it is capable of generating.

More particularly, upper trawl door extension piece 83 is formed in a fashion essentially identical to upper trawl door portion 72, and includes upper trawl door extension piece deflector body 52, extension slats 87 and upper trawl door extension piece lower plate 85 that is essentially identical in form to center tension bearing plate 14 while performing the function both of upper tension bearing plate 13 as well as of upper deflector lower load bearing end-plate 61. Upper trawl door extension piece lower plate 85 attaches flush to the exterior surface of upper tension bearing plate 13 by means of bolts 90. Concavities are formed in the lower surface of upper trawl door extension piece lower plate 85 that receive the heads of bolts 26 and other protrusions that may be disposed on the exterior surface of upper tension bearing plate 13 so as to permit a flush, stable face-to-face meeting of the exterior surface of upper trawl door extension piece lower plate 85 with the exterior surface of upper tension bearing plate 13. Upper trawl door extension piece 83 also includes upper extension plate 93, which serves the function both of upper deflector upper load bearing end-plate 62 as well as the function, as far as providing a retention structure for extension spoilers 87, of upper tension bearing plate 13.

Similarly, lower trawl door extension piece 84 is formed in a fashion essentially identical to lower trawl door portion 71, and includes lower trawl door extension piece deflector body 53, extension spoilers 88 and lower trawl door extension piece upper plate 87 that is essentially identical in form to center tension bearing plate 14 while performing the function both of lower tension bearing plate 15 as well as of lower deflector upper load bearing end-plate 64. Lower trawl door extension piece upper plate 87 attaches flush to the exterior surface either of lower tension bearing plate 15 or of a weight plate 69 by means of bolts 90. Concavities are formed in the exterior surface of lower trawl door extension piece upper plate 87 that receive the heads of bolts 26 and other protrusions that may be disposed on the exterior surface of lower tension bearing plate 15 so as to permit a flush, stable face-to-face meeting of the exterior surface of lower trawl door extension piece upper plate 87 with the exterior surface of lower tension bearing plate 15. Lower trawl door extension piece 84 also includes lower extension plate 94, which serves the function both of lower deflector lower load bearing end-plate 65 as well as the function of, as far as providing a retention structure for extension spoilers 88, of tower tension bearing plate 15.

Because tensile and other load bearing requirements are lesser for upper and lower trawl door extension pieces 83, 85, in comparison with the remainder of trawl door 1, the upper and lower trawl door extension pieces 83, 85 may be formed with greater void spaces within their synthetic structures so as to create more buoyancy, and may be formed with a lesser quantity of hollow internal load bearing tubes 20, which may also lesser strengths and wall thicknesses, and/or of greater diameters so as to create more void spaces and buoyancy.

Furthermore, while the instant example of trawl door 1 of the present invention includes a swept back leading edge, like a Delta wing, which is known as "wing shaped" in the trawl door industry, it is possible that the trawl door of the present invention may have a leading edge that only lies in one plane and is intended to be used with the trawl door's leading edge perpendicular or generally perpendicular to the water flow. In such a trawl door, it is understood that the upper and lower trawl door extension pieces 83 and 85 also would have leading edges designed to be fished perpendicular or generally perpendicular to the oncoming water flow.

Furthermore, trawl door extension pieces 83 and 85 may themselves have leading edges that are designed to be fished perpendicular or generally perpendicular to the, oncoming water flow, while the remainder of the trawl door 1 may be as shown in FIG. 1, i.e. a "wing shaped" trawl door with "swept back" leading edges to its lower and upper trawl door portions 71 and 72, respectively.

In embodiment of the variable lift trawl door of the present invention, also known as an extendable trawl door, it is important that the location of towing warp connector 10 be positioned so as to maintain the balance of the trawl door upon addition or removal of trawl door extension pieces 83 and 85. Maintaining the balance of trawl door 1 with respect to is towing warp connector 10 may require moving towing warp connector 10 to another predetermined location provided on center tension bearing plate 14, and thus additional hardware may be predisposed on center tension bearing plate 14 to receive towing warp connector 10.

Finally, it is understood that trawl doors of the present invention may have their surface area increased by adding one or more of trawl door extension pieces somewhere other than to the distal portions of the trawl door. For example, one or more trawl door extension piece may be added to the center portion of the trawl door, such as by dividing center tension bearing plate 14 into two or three layers, separating the layers, and adding in between them either trawl door extension pieces 83, 85, or by adding just one trawl door extension piece. In the case of bottom trawl doors, it is presently preferred to add a single extension piece to the upper portion 72, so as to increase stability of the bottom trawl doors, which tend to tip over inward, i.e. toward the trawl. Alternatively, in alternative embodiments not shown herein, the trawl door extension pieces may be formed so as to telescope out from the remainder of the body of the trawl door, which such embodiment is most useful with trawl doors having deflector bodies and no spoilers.

Various alternative constructions of and uses for the trawl door extension pieces so as to make up the variable spreading force trawl doors of the present invention must be readily apparent to those ordinarily skilled in the art upon reading the present disclosure.

The present invention permits manufacture of a trawl door having a main deflector embodying the characteristics of a rather thick width, lightness in water and economy of manufacture, based upon the unexpected and heretofore unknown discovery that unlike usefulness for synthetics in other terrestrial and marine applications, in order for trawl doors usefully to be formed with their primary impact receiving structures employing a synthetic material, that such synthetic material must receive impacts fracture free. It is preferred that a Nylon chemically mixed with an elastomer (i.e. as a copolymer, e.g. a block or random copolymer, as described in more detail above) be employed as a preferred synthetic material for the impact bearing structures and especially exterior impact bearing structures and/or surfaces of trawl doors of the present invention, as well as for any tensile load bearing synthetic structures. The relative amounts of the Nylon and the elastomer may be adjusted experimentally, and should at least preclude formation of fractures on at least any portions of the trawl doors' exterior and/or impact bearing structures formed by the solid synthetic material. At present, a mass ratio of 16.6% (sixteen and six tenths percent) by mass of an elastomer to a Nylon is preferred, with a mass ratio of from at least five percent to eighteen percent (5% to 18%) of the elastomer by mass relative to the Nylon being presently useful. A Nylon elastomer copolymer and sold under the trade name "NYRIM" is preferred. In particular, "NYRIM" 1500 is presently preferred for trawl doors of the present invention. Another synthetic substance possibly useful for the synthetic portions of trawl doors of the present invention is sold under the trade name "STAR-RIM". Both "NYRIM" and "STAR-RIM" are products of Bruggemann Chemical Company. Information on "NYRIM", how to use it, how to blend it, its properties and the like are provided by Brüggeman Chemical Co. and found on the company's internet websites www.NYRIM.com, and www.rimnylon.com.

"NYRIM" and STAR-RIM are processed via RIM (Reaction Injection Molding) processing or casting. "NYRIM" can also be rotomolded. This may be done at low atmospheric pressures. As also disclosed in these websites, in order to manufacture the solid, finished synthetic material known as "NYRIM" having the above mentioned ratio of Nylon to elastomer so that it receives impacts fracture free for forming trawl doors of the present invention, AP-Caprolactam (special grade of caprolactam that contains very low water content) plus polymerization additives are used for anionic polymerization of caprolactam into (centrifugal) cast Nylon 6. As further disclosed in these websites, in this way cast stock shapes and profiles (rod, tube, plate, etc.) may be produced. Or, as disclosed herein, a predetermined shape generally in the shape of a portion of the trawl door of the present invention, or of the entire trawl door of the present invention, may be produced. As disclosed herein, any of these shapes may subsequently be machined to final dimensions. Brüggemann Chemical provides the following raw materials for the anionic polymerization mentioned above:
■ AP-Caprolactam;
■ catalyst Bruggolen@C10;
■ activator Bruggolen@C20; as well as
■ C1 Catalyst (MgBrLactamate);
■ Prepolymers P1-20A, P1-30;
■ Foam stabilizer;
■ Mold release; and
■ Black Master Batch.

The above listing represents one presently preferred embodiment for producing a suitable synthetic material for the trawl door of the present invention. The skilled person will realize that several other alternatives may as well be used and are encompassed by the invention, which provide high-strength materials that receive impacts fracture-free. As mentioned above, information on the properties of "NYRIM", how to use it, blend it, etc., so as to form by pouring into a hot mold the synthetic material for use in synthetic portions of trawl doors of the present invention are also disclosed in these incorporated by reference websites and/or URLS.

In order to more fully attain the objects of the present invention, it has surprisingly been found that a trawl door including at least one (1) spoiler disposed forward of the leading edge of at least a single main deflector body; and

a main deflector body having a cambered profile wherein the camber defined by the curvature of the main deflector's outer side from the leading edge to the trailing edge of the main deflector body is greater than the camber defined by the main curvature of the main deflector's inner side from the leading edge to the trailing edge of the main deflector body, generates more outwardly directed thrust per unit of resistance.

More specifically, it has surprisingly been found that a trawl door having at least one and preferably two slats disposed forward of (more proximal the oncoming water flow) a single main deflector body, and wherein said main deflector body has a profile wherein:
(i) the outer side exhibits greater camber than the inner side;
(ii) the widest point of the profile is greatest at a point front of center of profile;
(iii) the widest point of the profile is at least equal to 8% of the length of the chord of the main deflector, and preferably greater than 11% of the length of the chord of the main deflector, with 17% to 18% being preferred; and
(iv) the camber of its outer side is convex and the camber of its inner side is concave, from the leading edge of the main deflector to the trailing edge of the main deflector,
shows surprisingly improved outward thrust for a given resistance, while concurrently being capable of operating at the higher speeds of modern high speed trawlers, such as six to seven knots, while maintaining high efficiency, a result not obtainable with known trawl doors.

Such result is contrary to another belief of those skilled in the art, which contends that water flow at modern pelagic trawling speeds (3.0 knots to 7.0 knots) simulates air flow at high speeds, even speeds approaching supersonic, as the described properties for the cambered profile for the main deflector body of trawl doors of the present invention would not practically be incorporated into a high speed airfoil, nor would the entire trawl door's profile usefully be incorporated into a high speed airfoil.

Surprisingly, despite that fact that a great variety of synthetic materials are in use in impact receiving applications in a wide variety of industries, including commercial marine vessel hulls, which receive continual impacts, it has unexpectedly been found that only a synthetic material capable of forming solid structures that receive impacts fracture free is practically useful for the design, manufacture and use of trawl doors.

In order to expedite manufacture and reduce manufacturing costs of trawl doors of the present invention, it is preferred that the synthetic material that receives impacts fracture free be a thermoplastic that is capable of being poured into a mold, such as a hot mold. In the preferred embodiment, either the entire trawl door is molded at one time, or portions of the trawl door are molded and then attached together, such as by being fixed to a metallic frame.

However, in some applications, such as when using a Nylon mixed with an elastomer for the synthetic material forming synthetic portions of the trawl door of the present invention, It is anticipate that the entire trawl door may be molded at one time. In such a case, it is preferred that the towing points connection hardware 10, 11 and 12 be conventional metallic hardware that is attached to a tension and/or load bearing metallic frame that itself is situated within the mold in such a way that the thermoplastic is poured around and about such connection hardware incorporating tension bearing metallic frame, and subsequently solidifies around the structure of the frame. The frame should be shaped so as to distribute over a maximal area of the synthetic structure any torque or other forces applied between the metallic frame and the synthetic portion of the trawl door and/or main deflector body.

It is understood that molds in the shape of a portion of the trawl door, for use in manufacturing trawl doors of the present invention, such as in the shape of a deflector body of the trawl door, may leave imperfections and/or flaws upon the surface of the portion of the trawl door being formed by the mold upon solidification of the synthetic material. These flaws are readily removed by known methods. Thus, when in the present disclosure a mold is referred to as having the shape of a portion of trawl door 1, it is intended to include molds having generally a shape of a portion of the trawl door of the present invention.

Alternatively, the conventional metallic tow point hardware may be bolted to the finished main deflector body, or other substantial portion of the molded trawl door, the tensile bearing structure is formed from the synthetic. The positioning of the conventional tow points connection hardware may be calculated and oriented using any of a variety of methods widely known to those skilled in the art.

In another embodiment, electronic or mechanical hardware, including controls and power driven actuator for changing the orientation of the towing warp connector 10 relative to the remainder of trawl door 1, may be enclosed inside the synthetic structure of the trawl door. For example, electrical, mechanical or other hardware may be placed into a desired location within the hot mold prior to the pouring of the synthetic, thus becoming encapsulated by the synthetic, and being permanently contained within the synthetic structure of the trawl door.

If desired, in order to increase buoyancy and reduce costs, wherever strength requirements permit, hollow cavities or cavities filled with a light foam may be formed into the synthetic structures of the trawl door of the present invention by, for example, placing a foam block within the hot mold prior to pouring in the synthetic mixture. Or an empty hollow container of a certain shape may be placed within the hot mold prior to the pouring in of the synthetic mixture. In other aspects, void spaces may be created by rotomolding or by use of lost core technology in RIM.

Thus, teachings of the present invention provide for:

A trawl door (1) formed from a synthetic material comprising a polymeric material mixed with an elastomeric material in such a ratio of the polymeric material to the elastomeric material that solid synthetic portions of the trawl door receive impacts fracture free, whereby trawl door durability, lightness of weight in water and longevity are improved.

More explicitly, the present invention further provides for a trawl door as described above wherein those synthetic portions of the trawl door that receive impacts fracture free include exterior structures of the trawl door.

In yet further detail, the present invention provides for a trawl door as described above wherein the polymeric material used to form synthetic portions of the trawl door includes a Nylon.

Although the present invention has been described in terms of the presently preferred embodiments, it is to be understood that such disclosure is purely illustrative, and is not to be interpreted as limiting. Consequently, without departing from the spirit and scope of the invention, various alterations, modifications, and/or alternative applications of the invention are likely to be suggested to those skilled in the art after having read the preceding disclosure. Accordingly, it is intended that the following claims be interpreted as encompassing all alterations, modifications or alternative applications as fall within the true spirit and scope of the invention. In addition to the claimed embodiments in the appended claims, the following is a list of additional embodiments which may serve as the basis for additional claims in this application or in subsequent divisional applications.

### Embodiment 1

A trawl door formed from a synthetic material comprising a polymeric material mixed with an elastomeric material in such a ratio of the polymeric material to the elastomeric material that solid synthetic portions of the trawl door receive impacts fracture free, whereby trawl door durability, lightness of weight in water and longevity are improved.

### Embodiment 2

The trawl door of embodiment 1 wherein synthetic portions of the trawl door that receive impacts fracture free include exterior structures of the trawl door.

### Embodiment 3

The trawl door of embodiment 1 or 2, wherein said polymeric material comprises polyamide.

### Embodiment 4

The trawl door of embodiment 3 wherein said solid synthetic material comprises a polyamide and an elastomer, the solid synthetic material having a weight ratio of polyamide to elastomer in a range of about 5-75 wt% of the elastomer.

### Embodiment 5

The trawl door of embodiment 3 or 4 wherein the polyamide is selected from the group consisting of Nylon 6; Nylon 9; Nylon 6,6; Nylon 6,9; Nylon 6,10; Nylon 6,12; Nylon 4,6; Nylon 12 and any mixture thereof.

### Embodiment 6

The trawl door or embodiment 3, 4 or 5 wherein said polyamide and elastomer form a copolymer.

### Embodiment 7

The trawl door of any of embodiments 3-6 wherein the ratio of the polyamide to elastomer is in the range of 7-40 wt% elastomer.

### Embodiment 8

The trawl door of embodiment 7 wherein the ratio of the polyamide to elastomer is in the range of 16-40 wt% elastomer.

### Embodiment 9

The trawl door of embodiment 8 wherein the ratio of the polyamide to elastomer is in the range of 18-40 wt% elastomer.

### Embodiment 10

The trawl door of any of embodiments 1-9 wherein the elastomer is selected from the group consisting of polyolefins including polyethylene (ethylene homopolymer), ethylene/alpha-olefin interpolymers, alpha-olefin homopolymers, such as polypropylene(propylene homopolymer), and alpha-olefin interpolymers; polyamines including polybutadiene diamine, polybutadiene polyamines and butadiene-acrylonitrile polyamines, polyether polyamines are poly(oxybutylene)diamine, poly(oxyethylene)diamine, poly(oxypropylene)diamine, poly(oxypropylene)triamine, poly(oxypropylene)tetramine and combinations thereof such as, for example, block copolymers of poly(oxypropylene) and poly(oxyethylene) with at least two functional amine groups.

### Embodiment 11

The trawl door of any of embodiments 2-10 wherein said exterior structure synthetic portions of the trawl door comprise at least one deflector body which comprises exterior portions formed from said synthetic material, said deflector body having a convex outer side and a concave inner side and comprising an internal support structure which form part of a load bearing frame.

### Embodiment 12

The trawl door of embodiment 11 wherein said internal support structure comprises hollow internal load bearing members.

### Embodiment 13

The trawl door of any of embodiments 1-12 wherein the trawl door further includes a trawl door extension piece, whereby trawl door spreading forces are able to be varied while simultaneously maintaining a trawl door angle of attack.

### Embodiment 14

The trawl door of embodiment 13 wherein the trawl door extension piece includes an extension piece deflector body.

### Embodiment 15

The trawl door of embodiment 13 wherein the trawl door extension piece includes at least one extension slat.

### Embodiment 16

A trawl door including at least one deflector body and at least one lift enhancing arrangement, the at least one lift enhancing arrangement being disposed forward of the at least one deflector body, the deflector body having a profile comprising:
a) a widest point that is at least eleven percent the length of a chord of the profile;
b) a concave inner side and a convex outer side; and
c) a widest point that is front of center,
whereby thrust generated by the trawl door is improved and water resistance generated by the trawl door is reduced.

### Embodiment 17

The trawl door of embodiment 16 wherein the widest point of the profile of the at least one deflector body is between seventeen percent (17%) and eighteen percent (18%) of the length of the chord of the profile, whereby laminar flow is improved.

### Embodiment 18

The trawl door of embodiment 16 or 17 wherein the widest point of the profile of the at least one deflector body is located at a point along the chord of the profile that corresponds to a distance that is front of center of the chord by at least three percent (3%) of the length of the chord.

### Embodiment 19

The trawl door of embodiment 16, 17 or 18 wherein the trawl door includes portions formed from a synthetic material comprising a polymeric material mixed with an elastomeric material in such a ratio of the polymeric material to the elastomeric material that solid synthetic portions of the trawl door receive impacts fracture free, whereby trawl door durability, lightness of weight in water and longevity are improved.

### Embodiment 20

The trawl door of embodiment 19, wherein said polymeric material comprises polyamide.

### Embodiment 21

The trawl door of embodiment 20 wherein said solid synthetic material comprises a polyamide and an elastomer, the solid synthetic material having a weight ratio of polyamide to elastomer in a range of about 5-75 wt% of the elastomer.

### Embodiment 22

The trawl door of embodiment 20 or 21 wherein said polyamide and elastomer form a copolymer.

### Embodiment 23

The trawl door of any of embodiments 16-22 wherein synthetic portions of the trawl door that receive impacts fracture free include exterior structures of the trawl door.

### Embodiment 24

The trawl door of any of embodiments 20-23, wherein the polyamide is selected from the group consisting of Nylon 6; Nylon 9; Nylon 6,6; Nylon 6,9; Nylon 6,10; Nylon 6,12; Nylon 4,6; Nylon 12 and a mixture thereof.

### Embodiment 25

The trawl door of any of embodiments 21-24 wherein the ratio of the polyamide to elastomer is in the range of 7-40 wt% elastomer.

### Embodiment 26

The trawl door of embodiment 21 wherein the ratio of the polyamide to the elastomer includes at least sixteen percent by weight of elastomer.

### Embodiment 27

The trawl door of embodiment 21 wherein the ratio of the polyamide to the elastomer includes at least eighteen percent by weight of elastomer.

### Embodiment 28

The trawl door of any of embodiments 16-27 wherein said deflector body comprises said portions from said synthetic material, and said deflector body comprises an internal support structure which form part of a load bearing frame.

### Embodiment 29

The trawl door of embodiment 28, wherein said internal support structure comprises hollow internal load bearing members.

### Embodiment 30

The trawl door of any of embodiments 16-29 wherein the trawl door further includes a trawl door extension piece, whereby trawl door spreading forces are able to be varied while simultaneously maintaining a trawl door angle of attack.

### Embodiment 31

The trawl door of embodiment 30 wherein the trawl door extension piece includes an extension piece deflector body.

### Embodiment 32

The trawl door of embodiment 30 wherein the trawl door extension piece includes at least one extension slat.

### Embodiment 33

The trawl door of embodiment 30 wherein the trawl door extension piece includes an extension piece lower plate.

### Embodiment 34

A trawl door comprising at least one trawl door extension piece, whereby trawl door size and spreading forces are able to be varied by deployment of the at least one trawl door extension piece.

### Embodiment 35

The trawl door of embodiment 34 wherein the trawl door includes at least two trawl door extension pieces.

### Embodiment 36

The trawl door of embodiment 34 or 35 wherein at least one trawl door extension piece includes an extension piece deflector body.

### Embodiment 37

The trawl door of embodiment 34, 35 or 36 wherein at least one trawl door extension piece includes at least one extension slat.

### Embodiment 38

The trawl door of any of embodiments 34-37 wherein at least one trawl door extension piece includes an extension piece lower plate.

### Embodiment 39

The trawl door of any of embodiments 34-38 wherein at least one trawl door extension piece includes at least a portion of a load bearing frame.

### Embodiment 40

The trawl door of any of embodiments 34-39, comprising exterior structures of the trawl door from synthetic material comprising a polymeric material mixed with an elastomeric material.

### Embodiment 41

The trawl door of embodiment 40 wherein said polymeric material comprises polyamide.

### Embodiment 42

The trawl door of embodiment 41 wherein said solid synthetic material comprises a polyamide and an elastomer, the solid synthetic material having a weight ratio of polyamide to elastomer in a range of about 5-75 wt% of the elastomer, the polyamide and elastomer forming a copolymer.

### Embodiment 43

A trawl door according to any one of embodiments 16 to 42, wherein the lift enhancing arrangement comprises a slat having a profile generally the same as the profile of the outer side of the main deflector body at an area proximal the thickest point of the main deflector body.

### Embodiment 44

A trawl door according to embodiment 43, wherein the slat has a leading edge and a profile length such that a trailing edge of the slat projects above the profile.

### Embodiment 45

A trawl door according to embodiment 43 to 44, wherein a further slat is provided between the slat and the leading edge of the profile.

### Embodiment 46

A trawl door according to embodiment 45, wherein the further slat has a profile the same as the profile of the outer side of the main deflector body at an area rearward of the leading edge of the main deflector body but forward of the thickest point of the main deflector body.

### Embodiment 47

A trawl door according to embodiment 46, wherein the slat has a leading edge which is in line with the leading edges of the slat and main deflector body respectively.

### Embodiment 48

A trawl door according to embodiment 46 or 47 wherein the further slat is shorter than the slat.

### Embodiment 49

A trawl door according to embodiment 45, 46, or 47 wherein the leading edge of the slat is positioned mid-way between the leading edge of the slat and the leading edge of the main deflector body.

### Embodiment 50

A trawl door according to any one of embodiments 43 to 49 wherein the main deflector body is provided with at least one trailing edge slat located at the trailing edge of the profile adjacent the concave inner side.

### Embodiment 51

A trawl door according to embodiment 50, wherein said at least one slat is generally straight in profile.

### Embodiment 52

A trawl door according to embodiment 51, wherein the trailing edge of the at least one slat is aligned with the trailing edge of the profile.

### Embodiment 53

A trawl door according to embodiment 50, 51 or 52 wherein there are two slats with their trailing edges aligned with the trailing edge of the profile.

### Embodiment 54

A trawl door, according to embodiment 53, wherein the distal slat is half the length of the proximal slat.

### Embodiment 55

A trawl door according to embodiment 53 or 54 wherein the proximal slat is equidistant the distal slat and the trailing edge of the profile.

### Embodiment 56

An improved method for producing a trawl door using synthetic materials, the method comprising steps selected from a group consisting of:
a) fabricating a portion of the trawl door by a process which includes the steps of:
   i) forming a mold cavity that is shaped generally to form at least a portion of the trawl door;
   ii) situating into said mold cavity a liquid synthetic material capable of solidifying to form a solid synthetic material capable of receiving impacts fracture free; and
   iii) curing the liquid synthetic material in the mold cavity to form the solid synthetic material forming at least a synthetic portion of the trawl door which receives impacts fracture free;
b) fabricating a portion of the trawl door by a process which includes the steps of:
   i) forming a mold cavity that is shaped generally to form at least a portion of the trawl door;
   ii) situating into said mold cavity a liquid synthetic material capable of solidifying to form a solid synthetic material having polymeric material mixed with elastomeric material in a certain ratio; and
   iii) curing the liquid synthetic material in the mold cavity to form said solid synthetic material, the ratio of the polymeric and elastomeric materials providing solid synthetic material for at least a synthetic portion of the trawl door which receives impacts fracture free;
c) fabricating a portion of the trawl door by a process which includes the steps of:
   i) placing at least a portion of a load bearing frame in a predetermined position in a mold cavity that is shaped generally to form at least a portion of the trawl door;
   ii) situating into said mold cavity containing the at least a portion of the load bearing frame a liquid synthetic material capable of solidifying to form a solid synthetic material having polymeric material mixed with elastomeric material in a certain ratio; and
   iii) curing the liquid synthetic material in the mold cavity to form said solid synthetic material, the ratio of the polymeric and elastomeric materials providing solid synthetic material for at least a synthetic portion of the trawl door which receives impacts fracture free;
d) fabricating a portion of the trawl door by a process which includes the steps of:
   i) situating into a mold cavity a liquid synthetic material capable of solidifying to form a solid synthetic material having polymeric material mixed with elastomeric material in a certain ratio;
   ii) curing the liquid synthetic material in the mold cavity to form said solid synthetic material, the ratio of the polymeric and elastomeric materials providing solid synthetic material for at least a synthetic portion of the trawl door which receives impacts fracture free;
   iii) machining the solid synthetic material at least generally into a desired shape of the at least a portion of the trawl door, whereby at least trawl door lightness of weight in water and ease of manufacture are improved.

### Embodiment 57

The method of embodiment 55 wherein the step of situating into the mold cavity the liquid synthetic material capable of solidifying to form the solid synthetic material having the polymeric material mixed with the elastomeric material includes the further step of selecting as the liquid synthetic material a material capable of solidifying to form solid synthetic material having as the polymeric material at least a polyamide.

### Embodiment 58

The method of embodiment 56 wherein the step of pouring into the mold cavity containing the portion of the load bearing frame the liquid synthetic material capable of solidifying to form the solid synthetic material having the polymeric material mixed with the elastomeric material includes the further step of selecting as the liquid synthetic material a material capable of solidifying to form solid synthetic material having as the polymeric material at least a polyamide.

### Embodiment 59

The method of embodiment 58 wherein the step of pouring into the mold cavity the liquid synthetic material capable of solidifying to form the solid synthetic material having the polymeric material mixed with the elastomeric material includes the further step of selecting as the liquid synthetic material a material capable of solidifying to form solid synthetic material having as the polymeric material at least Nylon-6.

### Embodiment 60

The method of embodiment 56 wherein the step of pouring into the mold cavity containing the portion of the load bearing frame the liquid synthetic material capable of solidifying to form the solid synthetic material having the polymeric material mixed with the elastomeric material includes the further step of selecting as the liquid synthetic material a material capable of solidifying to form solid synthetic material having as the polymeric material at least a Nylon-6.

## Claims

1. A trawl door (1) for use with a trawl net, the trawl door having a leading edge (6a) and a trailing edge (30, 32), at least one main deflector body (3, 4) having a leading edge (31) and a trailing edge (30, 32) and having a convex outer side (28) and a concave inner side (29), the trawl door having:
(i)) at least one forward slat (6) having a leading edge (6a) and a trailing edge and
(ii) a profile for at least a portion of the trawl door where:
a) the at least one forward slat's leading edge is disposed forward of the leading edge of the at least one main deflector body; and
b) the at least one main deflector body has a profile (27),
**the trawl door being characterized in that:**
(iii) the profile for the at least a portion of the trawl door is configured so that at least a portion of the at least one forward slat is above the top surface (28) of the profile (27) of the at least one main deflector body (3, 4).

2. The trawl door (1) according to claim 1 where the trawl door is **further characterized in that** the trawl door includes at least another main deflector body (3, 4), the deflector bodies lying in different planes.

3. The trawl door (1) according to any one of claims 1 and 2 where the trawl door is **further characterized in that** a slot is formed between the at least one forward slat (6) and the at least one main deflector body (3, 4).

4. The trawl door (1) according to any one of claims 1, 2 and 3 where the trawl door is **further characterized in that** it further includes at least another forward slat (7).

5. The trawl door (1) according to claim 4 wherein the profile for the at least a portion of the trawl door is **further characterized in that** at least a portion of the at least another forward slat (7) is located within the slot formed between the at least one forward slat (6) and the at least one main deflector body (3, 4).

6. The trawl door (1) according to any one of claims 4 and 5 wherein the profile for the at least a portion of the trawl door is **further characterized in that** the at least another forward slat (7) does not extend above the top surface (28) of the profile (27) of the at least one main deflector body (3, 4).

7. The trawl door (1) according to any one of claims 4, 5 and 6 wherein the portion of the trawl door having the profile is **further characterized in that** the at least one forward slat is a forward leading slat and the at least another forward slat (7) is a forward trailing slat.

8. The trawl door (1) according to any one of claims 4, 5, 6 and 7 wherein the profile for the at least a portion of the trawl door is **further characterized in that** the at least another forward slat (7) is shorter than the at least one slat (6).

9. The trawl door (1) according to any one of claims 4, 5, 6, 7 and 8 wherein the profile for the at least a portion of the trawl door is **further characterized in that** the slot formed between the at least one forward slat (6) and the at least one main deflector body (3, 4) progressively diminishes in area in a direction moving away from the leading edge (31) of the main deflector body (3, 4).
